# EUROPÄISCHE PATENTSCHRIFT

(11) **EP 0 597 973 B1**
(45) Veröffentlichungstag und Bekanntmachung des Hinweises auf die Patenterteilung: **10.01.1996**
(21) Anmeldenummer: 92916941.5
(22) Anmeldetag: 12.08.1992
(51) Int. Cl.: B62K 25/00

(54) **MOTORRAD MIT EINER ACHSSCHENKELLENKUNG**
MOTORCYCLE WITH STUB-AXLE STEERING
MOTOCYCLETTE AVEC DIRECTION A FUSEE

(30) Priorität: 13.08.1991 DE 4126761
(43) Veröffentlichungstag der Anmeldung: 25.05.1994
(73) Patentinhaber: FA. WILHELM KARL BEIRLEIN, D-81735 München (DE)
(72) Erfinder: BEIRLEIN, Wilhelm, Karl, D-8000 München 83 (DE)
(74) Vertreter: Patentanwälte Viering & Jentschura
(86) Internationale Anmeldenummer: DE9200673
(87) Internationale Veröffentlichungsnummer: WO9303952

(56) Entgegenhaltungen:
- EP-A- 0 393 218
- DE-A- 2 905 776
- DE-U- 8 911 665
- US-A- 4 526 249

## Beschreibung

Die Erfindung betrifft ein Motorrad mit einer Achsschenkellenkung für das Vorderrad des Motorrads, wobei das Vorderrad über zumindest eine Schwinge am Rahmen des Motorrads aufgehängt ist, und die Schwinge mit einem Achsschenkelträger verbunden ist, an dem ein Achsschenkelbolzen um seine die Lenkachse darstellende Längsachse drehbar gelagert ist, um welche das Vorderrad schwenkbar ist, wobei der Achsschenkelbolzen in der Vorderradnabe des Vorderrades angeordnet ist und seine Längsachse in der Radmittelebene verläuft und gegenüber der Vorderradachse in Richtung Morradheck versetzt ist und in einem derartigen Lenkachsenwinkel zur Fahrbahn verläuft, daß sich ein positiver Nachlauf ergibt.

Derartige Achsschenkellenkungen sind seit längerem bekannt. Im Unterschied zur Steuerkopflenkung sind bei der Achsschenkellenkung die Radführungs- und Feder/Dämpferelemente am Hauptrahmen angelenkt, werden also bei Lenkbewegungen nicht mitgeschwenkt.

Der Vorteil einer Achsschenkellenkung liegt unter anderem in der Verringerung der Massenträgheitsmomente um die Lenkachse sowie in einer geringeren Bauhöhe des Motorrades unter Beibehaltung ausreichender Federwege.

Jedes Motorrad hat zwei kritische Schwingungsformen. Die erste Schwingungsform ist das Flattern, d.h. eine Schwingung des Vorderrads und des Lenksystems um die Lenkachse. Dem Flattern kann durch Vergrößerung des Nachlaufs entgegengewirkt werden. Unter Nachlauf versteht man den Abstand zwischen der lotrechten Projektion der Radachse auf die Fahrbahn und der Verlängerung der Lenkachse auf die Fahrbahn. Jedoch darf der Nachlauf nicht zu groß werden, da das Motorrad ansonsten schwer lenkbar wird. Die zweite kritische Schwingungsform ist das Pendeln, was eine komplexe Koppelschwingung des Vorder- und Hinterradsystems darstellt, wobei das Motorrad eine Lenk-, Gier- und Rollschwingung vollzieht. Dieser Schwingung kann mit einem möglichst flachen, d.h. kleinen Lenkachsenwinkel entgegengewirkt werden, d.h. mit einem möglichst kleinen Winkel zwischen der Fahrbahn und der Lenkachse, um welche das Vorderrad schwenkbar ist. Das Optimum ist also ein relativ kleiner Lenkachsenwinkel bei nicht zu großem Nachlauf. Diese Forderungen sind schwer zu erfüllen, da bei herkömmlichen Konstruktionen bei kleinerem Lenkachsenwinkel der Nachlauf zu groß und das Motorrad dadurch schwer beherrschbar wird.

Die wohl bekannteste Achsschenkellenkung ist die sogenannte "Diffazio-Lenkung", gemäß welcher das Vorderrad über einen Achsschenkel an einer breiten doppelseitigen Schwinge aufgehängt ist uni um einen Achsschenkelbolzen schwenkbar ist, dessen Längsachse damit zugleich die Lenkachse darstellt. Diese Lenkachse verläuft durch die Radmitte, was bei einem brauchbaren Lenkachsenwinkel einen unerwünschten großen Nachlauf zur Folge hat. Dadurch läßt sich das Motorrad schwer lenken. Darüberhinaus ist der mögliche Lenkeinschlagwinkel relativ eng begrenzt, so daß sich diese Lenkung im Straßenverkehr nicht durchsetzen konnte, für dessen Zulassung beispielsweise in Deutschland ein möglicher Lenkeinschlagwinkel von wenigstens 30° nach beiden Seiten gefordert wird.

Eine weitere Achsschenkellenkung ist beispielsweise aus dem Rennsport aufgrund der "Elf-X"-Prototypen bekannt. Ein solche Achsschenkellenkung zeigt die DE-PS 29 05 776, bei welcher das Vorderrad mit einem seitlich aus der Radmittelebene versetzten Schwenklager versehen ist, welches relativ aufwendig durch zwei einseitige Schwingen geführt ist. Die von dem Schwenklager ausgebildete Lenkachse ist gegenüber der Radachse in Richtung Fahrzeugheck versetzt, damit der Nachlauf keine zu großen Werte annimmt. Das Schwenken des Vorderrades erfolgt über eine relativ komplizierte Konstruktion mit Spurhebel und Spurstange.

Nachteilig ist bei dieser Konstruktion, daß die Lenkachse in Draufsicht auf das Motorrad seitlich zur Längsachse des Motorrads und damit zur Radmittelebene versetzt ist, wodurch die auf das Vorderrad einwirkenden Längskräfte ein Lenkmoment verursachen, gegen welches des Fahrer gegensteuern muß.

Um dieses Lenkmoment zumindest zu verkleinern, wurde versucht, die Lenkachse so nah wie möglich an die Radmittelebene zu legen. Dazu wurden die Radspeichen so gestaltet, daß diese sich einseitig im Bogen zur schwingenfreien Radseite hin erstreckten. Dies hat jedoch den Nachteil einer ungünstigen Kräfteverteilung in dem Rad und bringt einen erheblich größeren Herstellungsaufwand für das Rad mit sich, zumal die Speichen wegen der unsymmetrischen Anordnung zur Radmittelebene eine höhere Steifigkeit aufweisen müssen. Neben Kostengründen aufgrund der komplizierten Konstruktion eignet sich schon allein aus optischen Gründen ein solches Vorderrad nicht für ein Serienfahrzeug.

Die Erfindung löst die Aufgabe, ein Motorrad der eingangs erwähnten Art mit einer Achsschenkellenkung zu schaffen, welche unter Verwirklichung eines optimalen Nachlaufs und Lenkachsenwinkels bei einfacher und kostengünstiger Konstruktion bei Geradeausfahrt kein Moment um die Lenkachse verursacht, wobei eine kostengünstige, einfache Konstruktion bei einfacher Realisierung von Spielfreiheit, hoher Belastbarkeit und leichter Montierbarkeit gewährleistet ist.

Dies Aufgabe wird erfindungsgemäß dadurch gelöst, daß der Achsschenkelbolzen in seiner Längsrichtung geteilt ist und die Bolzenteile in die Vorderradnabe eingeschraubt und über Kegelrollenlager mit dem Achsschenkelträger verspannt sind.

Mit dieser Konstruktion läßt sich Spielfreiheit einfach realisieren, indem Kegelrollenlager gegeneinander vorgespannt werden. Darüberhinaus nehmen die Kegelrollenlager hohe Kräfte auf, ohne einen Schaden davonzutragen. Hohe Kräfte können sich beispielsweise beim Durchfahren eines Schlaglochs ergeben.

Als äquivalente Lagerung bietet sich beispielsweise auch eine Axial-Rillenkugellagerung oder eine Schrägkugellagerung an. In der billigsten Ausführung ist auch ein Radial-Rillenkugellager möglich, das sich auch zum Aufnehmen von Axialkräften eignet.

Durch die erfindungsgemäße Anordnung der Lenkachse in der Radmittelebene und den durch die erfindungsgemäße Konstruktion verwirklichten festen Abstand zwischen der Radachse und der Lenkachse, der auch bei einem Lenkeinschlag beibehalten wird, wird durch die Erfindung eine großserientaugliche Achsschenkellenkung bereitgestellt, die mit sehr einfachen Teilen und Massenprodukten zu verwirklichen ist. Durch den festen Abstand zwischen der Radachse und der Lenkachse bleibt auch bei wünschenswert kleinem Lenkachsenwinkel ein für die Stabilisierung des Vorderrads notwendiger positiver Nachlauf erhalten, der auf eine wünschenswerte Größe beschränkt bleibt. So bleibt das Motorrad auch bei Langsamfahrt beherrschbar, wobei das Motorrad aufgrund geringer Kreiselkräfte keine so hohe Eigenstabilität hat.

Der Nachlauf und der Lenkachsenwinkel lassen sich konstruktiv bei der erfindungsgemäßen Achsschenkellenkung sehr einfach verändern, da die Winkellage des Achsschenkelbolzens und damit der Lenkachsenwinkel leicht verändert werden kann. Dies ist beispielsweise bei einer Führung des Vorderrades in einer herkömmlichen Gabel konstruktiv nicht in beliebigen Grenzen möglich, da das Motorrad aufgrund des kleinen Lenkachsenwinkels und der dadurch hervorgerufenen langen Gabel ansonsten einem Chopper ähnlich würde.

Ein weiterer Vorteil der erfindungsgemäßen Achsschenkellenkung ist in der kostengünstigen Herstellung zu sehen. So können beispielsweise viele wesentliche Teile der Achsschenkellenkung direkt aus den Automobilbau übernommen werden, wodurch ein großer Kostenvorteil erreicht wird. Die übrigen Teile sind entweder leicht herzustellen oder Normteile.

Darüberhinaus erweckt die sehr einfache erfindungsgemäße Konstruktion auch einen optisch angenehmen Eindruck, was für die Verkaufbarkeit eines Serienmotorrads sehr wesentlich ist.

Nach einer bevorzugten Ausführungsform der Erfindung ist die Vorderradnabe mit einem Lenkträger starr verbunden, welcher über ein unteres Kardangelenk, einen Drehmomente übertragenden Teleskoparm und ein oberes Kardangelenk mit der vom Fahrer drehbaren Lenkstange des Motorrads verbunden ist. Auf diese Weise konnte eine besonders platzsparende Lenkung verwirklicht werden. Der gemäß dieser Ausführungsform vorgesehene Längenausgleich durch das teleskopische Lenkgestänge ist erforderlich, weil die vom Fahrer ergriffene Lenkstange bezüglich des Motorradrahmes in ihrer Höhenlage ortsfest ist, das Vorderrad jedoch bezüglich des Rahmens einfedert und damit bezüglich des Rahmens seine Höhenlage verändert. Der Lenkträger kann ein einfaches rechteckiges Hohlprofil sein. Die Kardangelenke sind als Normteile im Handel erhältlich.

Vorzugsweise kann der Lenkträger eine relativ geringe Steifigkeit haben, wenn der Stoßdämpfer wie weiter unten noch erläutert werden wird, an der Schwinge und dem Motorradrahmen angelenkt ist. In diesem Fall dient der Lenkträger nur zur Übertragung der Lenkkräfte. Es ist aber auch möglich, den Lenkträger steifer auszubilden und einen Stoßdämpfer mit seinem einen Ende an den Lenkträger und mit seinem anderen Ende an den Motorradrahmen anzulenken. Es ist jedoch auch ein anderer Höhenausgleich möglich, beispielsweise in Form von mit einfachen Gelenken verbundenen Lenkern. Diese Lenker können auch das zum Lenken erforderliche Lenkmoment direkt übertragen, so daß der Lenkträger bei einer derartigen Konstruktion entfällt. Es ist auch eine Lenkung mit einer Spurstange und einem Spurhebel möglich.

Nach einer weiteren bevorzugten Ausführungsform der Erfindung weist der Teleskoparm eine Keilwelle und eine längs dieser verschiebbare, Drehmomente übertragende Kugelumlaufbüchse auf. Dabei kann die Kugelumlaufbüchse gegen die Keilwelle vorgespannt sein, wodurch sich Spielfreiheit und eine hohe Steifigkeit des Lenkgestänges realisieren läßt, obgleich eine leichtgängige Längsverschiebbarkeit der Kugelumlaufbüchse auf der Keilwelle gewährleistet bleibt. Die Kugelumlaufbüchse und die Keilwelle sind ebenfalls als Normteile erhältlich und damit kostengünstig.

Nach einer weiteren bevorzugten Ausführungsform der Erfindung hat der Achsschenkelträger eine konzentrisch zum Vorderrad verlaufende Achse, deren radseitiges Ende mit einer seitlich in Richtung Fahrzeugheck versetzten Lagerbüchse zum Aufnehmen des Achsschenkelbolzens starr verbunden ist. Die Achse des Achsschenkelträgers verläuft gemäß dieser Ausführungsform hauptsächlich aus optischen Gründen konzentisch zur Radachse. Um den Versatz der Lenkachse, d.h. der Längsachse des Achsschenkelbolzens, in Richtung Fahrzeugheck dennoch zu gewährleisten, wurde die Lagerbüchse zum Aufnehmen des Achsschenkelbolzens mit seiner Wälzlagerung gegenüber der Achse des Achsschenkelträgers seitlich in Richtung Fahrzeugheck versetzt. Es ist jedoch auch möglich, die Achse des Achsschenkelträgers bezogen auf die Radachse in Richtung Fahrzeugheck zu versetzen. Es kann auf die Achse auch völlig verzichtet werden und eine entsprechende Lagerhülse für den Achsschenkelbolzen unmittelbar an der Schwinge angeordnet sein.

Nach einer weiteren bevorzugten Ausführungsform der Erfindung ist die Schwinge eine Einarmschwinge mit einem Längslenker, der einen Bogen beschreibt, der in bezug auf das Motorrad zugleich nach oben und nach außen gekrümmt verläuft. Durch die Wahl einer Einarmschwinge läßt sich das Vorderrad sehr einfach und schnell demontieren. Durch den speziellen nach oben gebogenen Verlauf der Schwinge kann das Vorderrad mit geringem Platzbedarf an den Rahmen angelenkt werden. Durch den speziellen nach außen gebogenen Verlauf der Schwinge kann ein großer Lenkeinschlagwinkel von über 30° gewährleistet werden, wie er beispielsweise für die Zulassung zum öffentlichen Straßenverkehr in Deutschland vom TÜV (Technischer Überwachungsverein) vorgeschrieben ist.

Vorzugsweise kann ein Stoßdämpfer im Bereich des höchsten Punktes des Längslenkers an diesem angelenkt sein. Dadurch läßt sich eine platzsparende Anbringung des Stoßdämpfers verwirklichen, wobei ein ausreichend großer Federweg realisiert ist. Es ist jedoch auch möglich, den Stoßdämpfer mit seinem einen Ende an einer beliebigen anderen Stelle der Schwinge anzulenken. Wie bereits erwähnt, kann der Stoßdämpfer mit seinem einen Ende auch am Lenkträger anstatt an der Schwinge angelenkt sein. Das andere Ende des Stoßdämpfers ist in aller Regel an den Rahmen des Motorrads angelenkt.

Nach einer bevorzugten Weiterbildung der Erfindung ist zur Versteifung an den Längslenker ein weiterer Träger angeschweißt ist, der einen Bogen beschreibt, der in bezug auf das Motorrad nach unten und nach außen gekrümmt verläuft. Diese Ausführungsform gewährleistet eine Versteifung der Schwinge, obgleich weiterhin ein großer Lenkeinschlagwinkel von über 30° gewährleistet bleibt.

Nach einer bevorzugten Ausführungsform der Erfindung liegen die Speichen symmetrisch zur Radmittelebene. Durch die erfindungsgemäße Achsschenkellenkung lassen sich derartige herkömmliche Räder verwenden, obgleich die Lenkachse in der Radmittelebene liegt.

Die Erfindung wird nachfolgend anhand eines bevorzugten Ausführungsbeispiels unter Bezugnahme auf die Zeichnung erläutert. In der Zeichnung zeigen:
Fig. 1 eine schematische Seitenansicht des Motorrades mit der Achsschenkellenkung
Fig. 2 eine perspektisische Darstellung der Vorderradaufhängung mit der Achsschenkellenkung sowie einen Teil der Achsschenkellenkung in Explosionsdarstellung.
Fig. 3 eine schematische Vorderansicht von vorne auf das Motorrad gesehen,
Fig. 4 eine schematische Seitenansicht des Vorderrads mit geometrischen Größenverhältnissen.

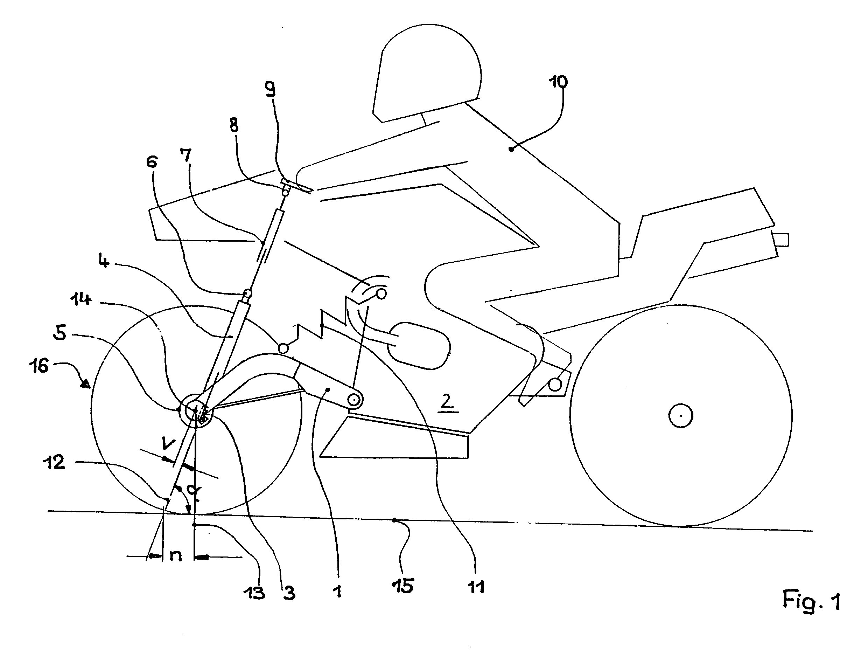

Fig. 1 zeigt eine Schwinge 1, die an dem Rahmen 2 des Motorrads angelenkt ist. Die Schwinge 1 trägt an ihrem radseitigen Ende einen in der Radmittelebene befindlichen Achsschenkelbolzen 3. Die Längsachse des Achsschenkelbolzens 3 stellt zugleich die Lenkachse 12 dar, um welche das Vorderrad 16 schwenkbar ist. Ein Lenkträger 4 ist an seinem einen Ende mit einer Vorderradnabe 5 starr verbunden. An seinem anderen Ende ist der Lenkträger 4 mit einem unteren Kardangelenk 6 verbunden, welches seinerseits über einen Drehmomente übertragenden Teleskoparm 7 mit einem oberen Kardangelenk 8 verbunden ist. An das obere Kardangelenk schließt sich eine Lenkstange 9 an, die von dem Fahrer 10 des Motorrads ergriffen werden kann. An die Schwinge 1 ist ein Stoßdämpfer 11 mit seinem einen Ende angelenkt und mit seinem anderen Ende an den Rahmen 2 angelenkt.

Der Achsschenkelbolzen 3 ist in Längsrichtung des Motorrads um ein Maß V nach hinten versetzt. Der Winkel zwischen der Fahrbahn 15 und der Lenkachse 12 wird als Lenkachsenwinkel α bezeichnet. Der Abstand zwischen der lotrechten Projektion 13 der Radachse 14 auf die Fahrbahn 15 und der Verlängerung der Lenkachse 12 auf die Fahrbahn wird als Nachlauf n bezeichnet. Durch den Versatz V ergibt sich auch bei relativ kleinem Lenkachsenwinkel α ein nicht zu großer Nachlauf n, wobei mit sehr geringem Aufwand der Achsschenkelbolzen 3 in der Vorderradnabe 5 in der Radmittelebene untergebracht werden konnte.

Wenn der Fahrer 10 an der Lenkstange 9 dreht, wird über das obere Kardangelenk 8 der Drehmomente übertragende Teleskoparm 7 gedreht, der seinerseits über das untere Kardangelenk 6 den Lenkträger 4 dreht, welcher mit der Vorderradnabe 5 starr verbunden ist. Der Lenkträger 4 schwenkt damit die starr mit ihm verbundene Vorderradnabe 5 und diese und damit das gesamte Vorderrad 16 um den Achsschenkelbolzen 3.

Wenn das Vorderrad 16 einfedert, wird die Schwinge 1 gegenüber dem Rahmen 2 nach oben geschwenkt, wobei der als Feder-Dämpfer-System ausgebildete Stoßdämpfer 11 einfedert. Da das gesamte Vorderrad 16 und damit die Vorderradnabe 5 und der Lenkträger 4 gegenüber dem Rahmen 2 ihre Lage nach oben verändern, die Lage der Lenkstange 9 jedoch in bezug auf den Rahmen 2 in ihrer Höhe konstant ist, wird der Längenausgleich durch den Teleskoparm 7 geschaffen. Entsprechendes gilt für das Ausfedern des Vorderrades 16.

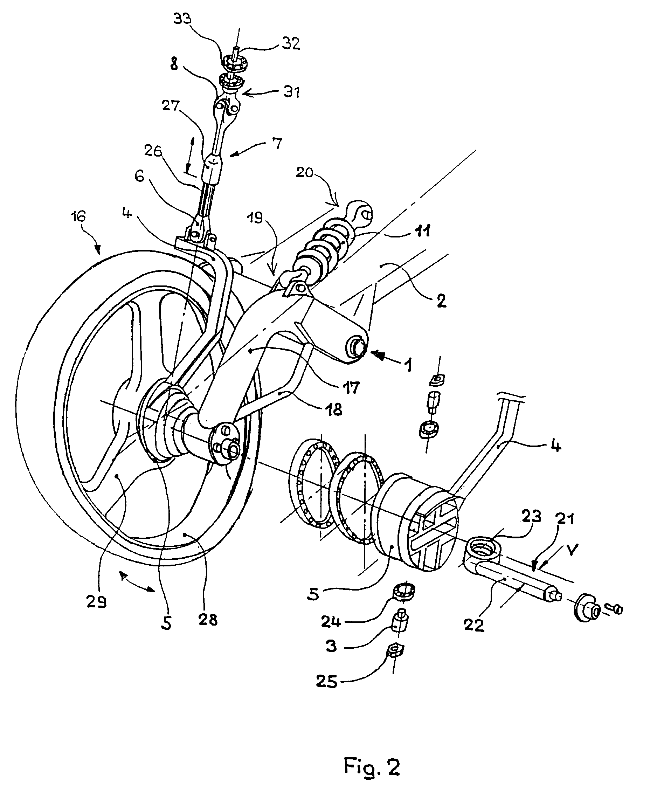

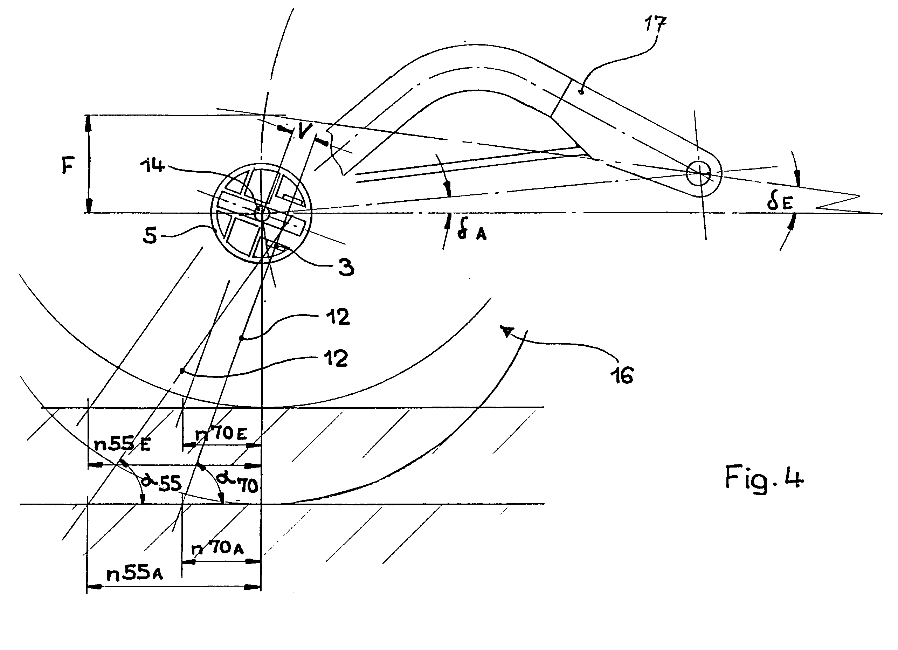

In der perspektivischen Darstellung Fig. 2 ist das Vorderrad 16 zu erkennen, welches über die Schwinge 1 an den Rahmen 2 angelenkt ist. Die Schwinge 1 wird von einem Längslenker 17 gebildet, der einen Bogen beschreibt, der in bezug auf das Motorrad zugleich nach oben und nach außen gekrümmt verläuft. Der Längslenker 17 weist somit zwei Endschenkel auf, von denen der eine am Rahmen 2 um eine im wesentlichen horizontale Achse angelenkt ist und der andere den Achsschenkelträger 21 zur Aufnahme des Achsschenkelbolzens 3 trägt. Die beiden Endschenkel verlaufen, gesehen in Seitenansicht, entsprechend Fig. 2 und 4 schräg zur Horizontalen und sind über einen mittleren Bogenteil mit oben liegendem Scheitel 19 miteinander verbunden. Der Winkel zwischen den Endschenkeln beträgt bei der dargestellten Ausführungsform etwa 115°. Aus Gründen der Steifigkeit ist an den Längslenker ein weiterer Träger 18 angeschweißt, der einen Bogen beschreibt, der in bezug auf das Motorrad nach unten und nach außen gekrümmt verläuft. Durch diese Gestaltung der Schwinge 1 kann das Vorderrad 16 mit geringem Platzbedarf an dem Rahmen 2 angelenkt werden und zugleich kann ein Lenkeinschlagwinkel von über 30° verwirklicht werden.

Der Stoßdämpfer 11 ist im Bereich des Bogenscheitels 19 des Längslenkers 17 an diesem mit seinem einen Ende angelenkt und mit seinem anderen Ende 20 an den Rahmen 2 angelenkt. Am radseitigen Ende trägt der Längslenker 17 den Achsschenkelträger 21, der eine konzentrisch zum Vorderrad 16 verlaufende Achse 22 hat, deren radseitiges Ende mit einer seitlich in Richtung Fahrzeugheck versetzten Lagerbüchse 23 zum Aufnehmen des in Längsrichtung in zwei Hälften geteilten Achsschenkelbolzens 3 über Kegelrollenlager 24 starr verbunden ist. Die Kegelrollenlager 24 werden mittels des Achsschenkelbolzens 3 vorgespannt, so daß die Lagerung spielfrei ist. Gegen Aufschrauben gesichert ist der Achsschenkelbolzen durch die Kontermuttern 25. Im fertig montierten Zustand ist die Vorderradnabe 5 in ihrer Mittelebene auf dem Achsschenkelträger 21 schwenkbar gelagert. Mit der Vorderradnabe 5 ist eine Felge 28 mittels der Speichen 29 verbunden. Der Versatz V des Achsschenkelbolzens 3 und damit der Lenkachse 12 gegenüber der Radachse 14 in Richtung Motorradheck wird durch die seitlich versetzte Anbringung der Lagerhülse 23 gegenüber der zur Radachse 14 konzentrischen Achsträgerachse 22 erreicht.

Mit der Vorderradnabe 5 starr verbunden, beispielsweise an diese angeschweißt, ist der Lenkträger 4, der seinerseits an seinem oberen Ende mit dem unteren Kardangelenk 6 verbunden ist. Der Teleskoparm 7 hat eine Keilwelle 26 und eine gegen die Keilwelle 26 vorgespannte Kugelumlaufhülse 27. Ein die Kugelumlaufhülse 27 tragender Arm 30 ist mit dem oberen Kardangelenk 8 verbunden, welches mit seinem oberen Ende 31 mit einer Lenkwelle 32 verbunden ist, die mit der die in Fig. 2 nicht dargestellten Lenkstange 9 verbunden ist. Die Lenkwelle 32 ist über Wälzlager 33 am Rahmen 2 gelagert.

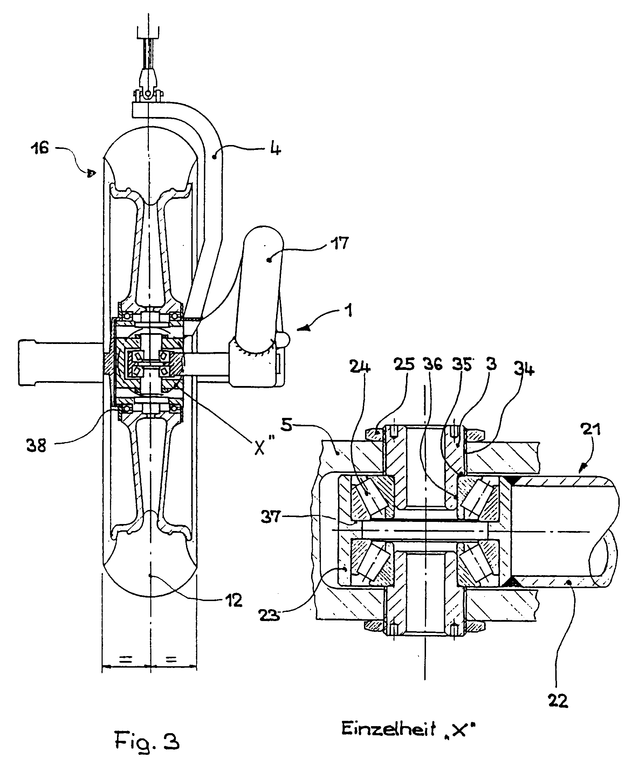

Fig. 3 zeigt eine schematische Vorderansicht der Vorderradaufhängung. Zu erkennen ist der Längslenker 17 der Schwinge 1. Der Achsschenkelträger 21 trägt mit seiner Achsschenkelträgerachse 22 mittels der Lagerbüchse 23 das Vorderrad 16. In der Lagerbüchse 23 ist der Achsschenkelbolzen 3 in der Radmittelebene in den Kegelrollenlagern 24 gelagert. Hierzu weist jeder Halbteil des Achsschenkelbolzens 3 einen Gewindeteil 34, eine daran anschließende axial ausgerichtete Ringschulter 35 und einen daran anschließenden, in den inneren Lagerring des jeweiligen Kegelrollenlager 24 eingreifenden Achsstummelteil 36 auf. In der Radnabe 5 ist eine Gewindebohrung zum Einschrauben der jeweiligen Achsschenkelbolzenhälften 3 ausgebildet. In eingeschraubter Lage der jeweiligen Achsschenkelbolzenhälfte 3 liegt das zugeordnete Kegelrollenlager 24 einerseits mit seinen Innenlagerring gegen die Ringschulter 35 des Achsschenkelbolzenteils 3 und andererseits mit seinem Außenlagerring gegen eine in der Lagerbüchse 23 an einem radialen Innenringbund derselben ausgebildete axiale Ringschulter 37 an, wodurch das Kegelrollenlager 24 je nach beim Einschrauben auf den Achsschenkelbolzen 3 aufgebrachtem Drehmoment vorgespannt wird. Die Lagerbolzenteile 3 werden jeweils von außen her in die zugeordneten Gewindebohrungen der Radnabe 5 eingeschraubt und ragen über deren Außenumfang radial nach außen hinaus. Gegen Aufschrauben gesichert wird der Achsschenkelbolzen 3 durch die Kontermuttern 25, die auf die radial nach außen vorstehenden Abschnitte der Gewindeteile 34 der Achsschenkelbolzenteile 3 bis zum Anschlag gegen die Nabe 5 aufgeschraubt sind.

Die Längsachse des Achsschenkelbolzens 3 stellt zugleich die in der Radmittelebene liegende Lenkachse 12 dar, um welche das Vorderrad 16 mittels des Lenkträgers 4 und des Teleskoparms 7 schwenkbar ist.

Vorteilhaft bei dieser Konstruktion ist auch die Lagerung des Vorderrades 16 mit Hilfe von als Radial-Rillenkugellager ausgebildeten Radlagern 38 mit einem sehr großen Nenndurchmesser. Durch den großen Nenndurchmesser erhöht sich die Tragfähigkeit des Radlagers 38, obgleich die Ringstärke und der Kugeldurchmesser der Radlager 38 kleiner dimensioniert sein können.

Fig. 4 zeigt eine schematische Seitenansicht des Vorderrads mit geometrischen Größenverhältnissen. Schematisch dargestellt sind der Längslenker 17, der in der Vorderradnabe 5 gelagerte Achsschenkelbolzen 3, die Radachse 14 des Vorderrades 16, sowie die Lenkachse 12. Dargestellt ist der vollständig eingefederte und ausgefederte Zustand. Der Federweg F beträgt etwa 100 mm. Der Versatz V zwischen der Vorderradachse und der Lenkachse beträgt gemäß der gezeigten Ausführungsform nur etwa 25 mm, kann jedoch wesentlich größer gewählt werden. Der Lenkachsenwinkel α kann sinnvollerweise in einer Bandbreite von etwa 50° bis 75° liegen. Gemäß der dargestellten Ausführungsform sind der Nachlauf n_{70E} = 100 mm und n_{70A} = 95 mm bei einem Lenkachsenwinkel α₇₀ von 70° im eingefederten bzw. ausgefederten Zustand des Vorderrades dargestellt; sowie der Nachlauf n_{55E} = 201 mm und n_{55A} = 186 mm bei einem Lenkachsenwinkel α₅₅ von 55° im eingefederten bzw. ausgefederten Zustand des Vorderrades, und die Winkel δ_{E} = 7,5° und δ_{A} = 5° zwischen der Verbindungslinie des Anlenkpunktes der Schwinge 1 an den Rahmen 2 und der Vorderradachse 14 und der Horizontalen durch die Vorderradachse im eingefederten bzw. ausgefederten Zustand. Wie aus diesem Ausführungsbeispiel zu entnehmen ist, bleibt der Nachlauf beim Ein- und Ausfedern annähernd konstant.

## Patentansprüche

1. Motorrad mit einer Achsschenkellenkung für das Vorderrad (16) des Motorrads, wobei das Vorderrad (16) über zumindest eine Schwinge (1) am Rahmen (2) des Motorrads aufgehängt ist, und die Schwinge (1) mit einem Achsschenkelträger (21) verbunden ist, an dem ein Achsschenkelbolzen (3) um seine die Lenkachse (12) darstellende Längsachse drehbar gelagert ist, um welche das Vorderrad (16) schwenkbar ist, wobei der Achsschenkelbolzen (3) in der Vorderradnabe (5) des Vorderrades (16) angeordnet ist und seine Längsachse in der Radmittelebene verläuft und gegenüber der Vorderradachse (14) in Richtung Morradheck versetzt ist und in einem derartigen Lenkachsenwinkel (α) zur Fahrbahn (15) verläuft, daß sich ein positiver Nachlauf (n) ergibt, dadurch gekennzeichnet, daß der Achsschenkelbolzen (3) in seiner Längsrichtung geteilt ist und die Bolzenteile in die Vorderradnabe (5) eingeschraubt und über Kegelrollenlager (24) mit dem Achsschenkelträger (21) verspannt sind.

2. Motorrad nach Anspruch 1, dadurch gekennzeichnet, daß die Vorderradnabe (5) mit einem Lenkträger (4) starr verbunden ist, welcher über ein unteres Kardangelenk (6), einen Drehmomente übertragenden Teleskoparm (7) und ein oberes Kardangelenk (8) mit der vom Fahrer (10) drehbaren Lenkstange (9) des Motorrads verbunden ist.

3. Motorrad nach Anspruch 2, dadurch gekennzeichnet, das der Teleskoparm (7) eine Keilwelle (26) und eine längs dieser verschiebbare, Drehmomente übertragende Kugelumlaufbüchse (27) aufweist.

4. Motorrad nach Anspruch 1, dadurch gekennzeichnet, daß der Achsschenkelträger (21) eine konzentrisch zum Vorderrad (16) verlaufende Achse (22) hat, deren radseitiges Ende mit einer seitlich in Richtung Fahrzeugheck versetzten Lagerbüchse (23) zum Aufnehmen des Achsschenkelbolzens (3) starr verbunden ist.

5. Motorrad nach Anspruch 1, dadurch gekennzeichnet, daß die Schwinge (1) eine Einarmschwinge mit einem Längslenker (17) ist, der einen Bogen beschreibt, der in bezug auf das Motorrad zugleich nach oben und nach außen gekrümmt verläuft.

6. Motorrad nach Anspruch 5, dadurch gekennzeichnet, daß ein Stoßdämpfer (11) im Bereich des höchsten Punktes des Längslenkers (17) an diesem angelenkt ist.

7. Motorrad nach Anspruch 5, dadurch gekennzeichnet, daß zur Versteifung an den Längslenker (17) ein weiterer Träger (18) angeschweißt ist, der einen Bogen beschreibt, der in bezug auf das Motorrad nach unten und nach außen gekrümmt verläuft.

8. Motorrad nach Anspruch 1, dadurch gekennzeichnet, daß die Speichen (29) des Vorderrades (16) symmetrisch zur Radmittelebene liegen.

## Claims

1. Motorcycle having a stub-axle steering for the front wheel (16) of the motorcycle, said front wheel (16) being suspended on the frame (2) of the motorcycle by at least one swinging arm (1) linked to a stub-axle bearer (21) journalling a stub-axle pin (3) rotatable about its longitudinal pin axis constituting the steering axis (12) about which the front wheel (16) can be pivoted, the stub-axle pin (3) being arranged in the front wheel hub (5) of the front wheel (16), the longitudinal pin axis being offset from the front wheel axis (14) towards the rear of the motorcycle and extending in the center plane of the front wheel (16) at such an angle (α) of the steering axis with respect to the ground (15) that a positive trail (n) results, characterised in that the stub-axle pin (3) is longitudinally divided and the pin sections are screwed into the front wheel hub (5) and clamped to the stub-axle bearer (21) through taper roller bearings (24).

2. Motorcycle according to claim 1, characterised in that the front wheel hub (5) is rigidly coupled to a steering arm (4) connected by a lower universal joint (6), a torque-transferring telescoping shaft (7) and an upper universal joint (8) to the motorcycle handlebar (9) rotatable by the driver (10).

3. Motorcycle according to claim 2, characterised in that the telescoping shaft (7) comprises a splined shaft (26) and a torque-transferring ball-circulating sleeve (27) displaceable along the splined shaft (26).

4. Motorcycle according to claim 1, characterised in that the stub-axle bearer (21) has an axle (22) extending concentrically with the front wheel (16), the end of said axle (22) adjacent the wheel (16) being rigidly coupled to a bearing shell (23) offset laterally towards the rear of the vehicle for receiving the stub-axle pin (3).

5. Motorcycle according to claim 1, characterised in that the swinging arm (1) comprises only one arm including a longitudinal control arm (17) having an arcuate form curving upwards and at the same time outwards with respect to the motorcycle.

6. Motorcycle according to claim 5, characterised in that a shock absorber (11) is hinged to the longitudinal control arm (17) in the crown area thereof.

7. Motorcycle according to claim 5, characterised in that a further arm (18) is welded to the longitudinal control arm (17) for bracing the latter, the bracing arm having an arcuate form curving downwards and outwards with respect to the motorcycle.

8. Motorcycle according to claim 1, characterised in that the spokes (29) of the front wheel (16) are arranged symmetrically to the center plane of the wheel.

## Revendications

1. Motorcyclette avec direction à fusée pour la roue d'avant (16) de la motorcyclette, dans laquelle la roue d'avant (16) est suspendue au moins par une aile (1) au cadre (2) de la motorcyclette, ladite aile (1) étant jointe avec un support de fusée (21), un pivot de fusée (3) etant logé de facon mobile autour de son axe longitudinal, constituant l'essieu directeur (12), autour duquel la roue d'avant (16) est pivotant, ledit pivot de fusée (3) étant placé dans le moyeu de devant (5) de la roue d'avant (16), l'axe longitudinal duquel court dans le plan médian de la roue, étant déplacé comparé à l'axe de la roue d'avant (14) en direction de l'arrière de la motorcyclette, ledit pivot de fusée formant un tel angle de l'essieu directeur (α) comparé à la piste (15) qu'en resulte une chasse positive (n), caractérisée en ce que le pivot de fusée (3) est divisé en longeur, les parts du pivot étant vissés dans le moyeu de devant (5) et étant haubanés par des roulement à rouleaux coniques (24) avec ledit support de fusée (21).

2. Motorcyclette de la revendication 1, caractérisée en ce que le moyeu de devant (5) est connecté de facon rigide avec un support de direction (4), ledit support étant connecté par un joint universel inférieur de cardan (6), par un bras téléscopique (7) transmettant des couples, et par un joint universel supérieur de cardan (8) avec le guidon (9) de la motorcyclette, ledit guidon pouvant être manipulé de facon pivotante par le conducteur (10).

3. Motorcyclette de la revendication 2, caractérisée en ce que le bras téléscopique (7) comprend un arbre cannelé (26) et un coussinet rotatif à billes (27), ledit coussinet étant coulissant en sens longitudinal du dit arbre cannelé et transmettant des couples.

4. Motorcyclette de la revendication 1, caractérisée en ce que le support de fusée (21) et fournit d'une axe (22) courante de facon concentrique à la roue d'avant (16), ladite axe étant connectée de facon rigide par son bout, au coté de la roue, avec un coussinet (23) déplacé en direction latéral vers l'arrière de la motorcyclette, pour la réception du pivot de fusée (3).

5. Motorcyclette de la revendication 1, caractérisée en ce que l'aile (1) est une aile à bras unique avec un bras oscillant longitudinal (17), ledit bras oscillant longitudinal décrivant une courbe, ladite courbe courante au même temps vers le haut et vers l'extérieur de facon recourbée par rapport à la motorcyclette.

6. Motorcyclette de la revendication 5, caractérisée en ce qu'un amortisseur (11) est articulé sur le bras oscillant longitudinal (17) dans la region du point plus haut du ce bras.

7. Motorcyclette de la revendication 5, caractérisée en ce qu'un support ultérieur (18) est soudé au bras oscillant longitudinal (17), renforcant ledit bras, ledit support décrivant une courbe, ladite courbe courante vers le haut et vers l'extérieur de facon recourbée par rapport à la motorcyclette.

8. Motorcyclette de la revendication 1, caractérisée en ce que les rais (29) de la roue d'avant (16) sont placés symétriquement par rapport au plan médian de la roue.
